Europäisches Patentamt

European Patent Office

Office européen des brevets

(19)

(11) Numéro de publication : **0 066 509**
**B1**

(12)    **FASCICULE DE BREVET EUROPÉEN**

(45) Date de publication du fascicule du brevet :
26.03.86

(51) Int. Cl.⁴ : **G 02 F 1/01, G 02 F 1/133**

(21) Numéro de dépôt : **82400949.2**

(22) Date de dépôt : **24.05.82**

(54) **Procédé de localisation du milieu liquide dans une cellule à milieu liquide et cellule correspondante.**

(30) Priorité : **27.05.81 FR 8110564**

(43) Date de publication de la demande :
**08.12.82 Bulletin 82/49**

(45) Mention de la délivrance du brevet :
**26.03.86 Bulletin 86/13**

(84) Etats contractants désignés :
**CH DE GB IT LI NL**

(56) Documents cités :
**DE-A- 2 011 220**
**FR-A- 2 191 135**
**FR-A- 2 225 068**
**PROCEEDINGS OF THE IEEE, vol. 61, no. 7, juillet 1973, pages 823-828, New York (USA); F.J. KAHN et al.: "Surface-produced alignment of liquid crystals"**

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur : **Clerc, Jean Frédéric**
**10, Allée du Pré Blanc**
**F-38240 Meylan (FR)**
Inventeur : **Vinet, Françoise**
**52, rue Thiers**
**F-38000 Grenoble (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

EP 0 066 509 B1

## Description

La présente invention a pour objet une cellule d'affichage à milieu liquide et un procédé de sa fabrication. Elle trouve une application en optoélectronique, et en particulier dans la réalisation d'écran de visualisation d'images et/ou de données alphanumériques.

Une telle cellule comprend un milieu liquide intercalé entre deux parois planes, généralement minces par rapport à leurs dimensions traversales et généralement réalisées en verre, maintenues écartées l'une de l'autre. Ces deux parois sont rendues solidaires l'une de l'autre au voisinage de leurs bords, au moyen de résines ou d'autres liants convenables permettant de les bloquer dans la position correcte. Le maintien des deux parois à une certaine distance l'une de l'autre peut être obtenu par exemple au moyen de cales d'épaisseur, notamment disposées le long des bords soudés ou réparties le plus uniformément possible entre les deux parois ; il peut aussi être obtenu par l'utilisation de parois rigides, par exemple du fait de leur épaisseur relativement grande.

Dans le domaine de la visualisation, le milieu liquide principalement utilisé est un cristal liquide qui comme son nom l'indique présente à l'état liquide des propriétés caractéristiques des cristaux solides et en particulier en ce qui concerne l'anisotropie.

On sait que pour obtenir un bon fonctionnement de la cellule en général, il est nécessaire que toute la zone utile de la cellule soit remplie de milieu liquide. Or, on sait que lorsque l'on remplit la cellule de milieu liquide, des bulles de gaz apparaissent au sein de la cellule.

Ces bulles de gaz, doivent être localisées en un endroit de la cellule ne risquant pas de gêner le fonctionnement de celle-ci. En effet, la présence de bulles de gaz dans la zone utile de la cellule peut être particulièrement gênante lorsque ladite cellule est employée dans le domaine de visualisation d'images et/ou de données alphanumériques.

Dans le document FR-A-2 039 689, il est décrit une cellule, notamment d'affichage, comprenant un milieu liquide intercalé entre deux parois, ces parois étant munies de rainures sur leurs surfaces intérieures agencées de façon à localiser le milieu liquide correctement. Cette localisation du milieu liquide est due à la tension superficielle, le long des bords des rainures.

La présente invention a justement pour objet une nouvelle cellule permettant de localiser le milieu liquide contenu dans cette cellule et, ce, uniquement dans la zone utile de ladite cellule et, donc, de localiser les bulles gazeuses dans la zone non utile de la cellule, et a aussi pour objet un procédé de fabrication d'une cellule à milieu liquide correspondante.

De façon plus précise, l'invention a pour objet une cellule d'affichage comprenant un milieu liquide intercalé entre deux parois maintenues écartées l'une de l'autre, les parois étant maintenues solidaires l'une à l'autre le long de leur bord, caractérisée en ce que les deux surfaces intérieures des parois sont, dans la zone utile à l'affichage, recouvertes d'un premier matériau, et en dehors de ladite zone, recouvertes d'un second matériau, le premier matériau présentant une tension superficielle plus grande que le deuxième matériau.

Dans cette cellule, le milieu liquide utilisé est de préférence un cristal liquide.

L'invention a aussi pour objet un procédé de fabrication d'une cellule du genre de celles précédemment décrites. Ce procédé se caractérise en ce que, avant de rendre solidaires les deux parois, on recouvre chacune des surfaces intérieures des parois de deux matériaux présentant des tensions superficielles différentes de façon que, après avoir rempli de milieu liquide la cellule, la zone occupée par le milieu liquide soit située en dehors du matériau présentant la tension superficielle la plus faible et que la zone occupée par le milieu liquide soit située au droit du matériau présentant la tension superficielle la plus grande.

D'autres caractéristiques et avantages de l'invention ressortiront mieux de la description qui va suivre, donnée à titre purement illustratif et non limitatif, en référence aux figures annexées, dans lesquelles :

la figure 1 représente une vue en coupe d'une cellule à milieu liquide, selon l'invention, et,

la figure 2 représente une vue de dessus de la cellule de la figure 1.

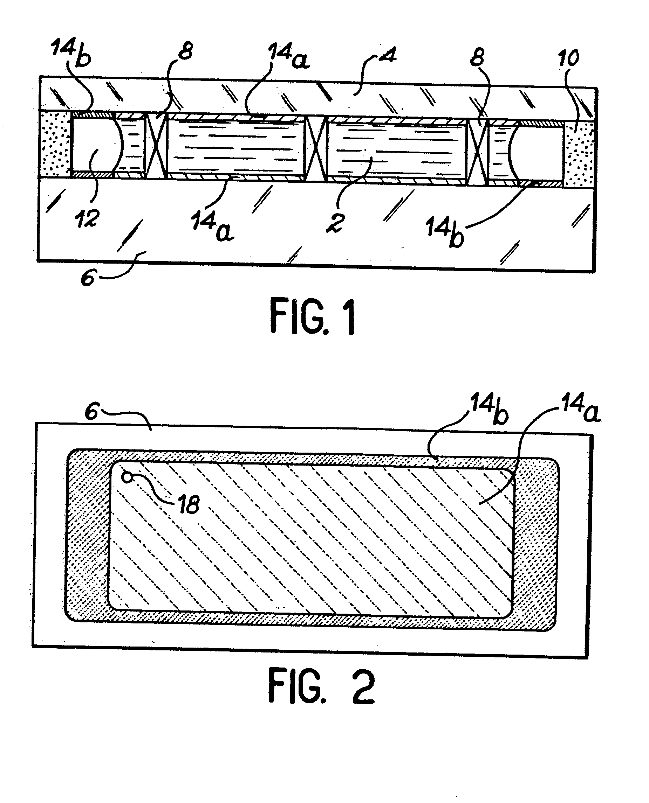

Sur la figure 1, on a représenté en coupe, une cellule à milieu liquide. La cellule est constituée d'un milieu liquide 2, pouvant être un cristal liquide, intercalé entre deux parois planes 4 et 6 parallèles entre elles. Les deux parois planes 4 et 6, réalisées en verre, sont maintenues écartées l'une de l'autre au moyen de cales d'épaisseur constante 8, régulièrement réparties entre les deux parois. Les parois 4 et 6 sont solidaires l'une de l'autre au moyen d'une soudure 10 effectuée au voisinage des bords desdites parois. La soudure 10 qui sert de mur d'étanchéité peut être réalisée à l'aide de résines ou par sérigraphie de verre fusible.

La fabrication d'une telle cellule à milieu liquide se fait en déposant par exemple sur l'une des parois des cales d'épaisseur constante 8, et ce par tout moyen connu, puis, en disposant la paroi munie desdites cales en regard de l'autre paroi de façon que les cales d'épaisseur soient placées entre les deux parois. Ensuite, on rend solidaires les deux parois 4 et 6 à l'aide de la soudure 10. Enfin, on remplit ladite cellule du milieu liquide 2 par un orifice adéquat 18 (figure 2).

Lors du remplissage de la cellule, il apparaît une poche gazeuse 12 ou des bulles gazeuses au sein de ladite cellule.

Selon l'invention, afin de localiser le milieu liquide dans la zone utile de la cellule, comme par exemple au centre de ladite cellule, et donc de localiser la poche gazeuse dans la zone non utile de la cellule, comme par exemple à la périphérie de celle-ci, on recouvre les surfaces des parois 4 et 6 en vis-à-vis de deux matériaux tels que 14a et 14b présentant des tensions superficielles différentes.

Sur la figure 2, on a représenté, au moyen d'une vue de dessus de la cellule, l'emplacement respectif des deux matériaux 14a et 14b. Le matériau 14a présentant la tension superficielle la plus grande appelée encore matériau mouillant, sera déposé au centre des surfaces des parois 4 et 6 en vis-à-vis de façon que le milieu liquide 2 occupe la zone centrale de la cellule. En effet, le matériau mouillant 14a attire à lui le milieu liquide. En revanche, le matériau 14b, présentant la tension superficielle la plus faible, appelée encore matériau non mouillant, pourra être déposé à la périphérie de la cellule sur les surfaces desdites parois en vis-à-vis afin que la zone occupée par le milieu liquide soit située en dehors dudit matériau, ce matériau 14b attirant peu ou, même, pas du tout le milieu liquide. En conséquence, la poche gazeuse 12 se trouvera chassée en regard du matériau 14b, c'est-à-dire en dehors du matériau 14a.

Dans le cas d'une cellule prévue pour la visualisation d'images et/ou de données alphanumériques, la poche gazeuse 12 pourra être localisée hors de la zone utile à l'affichage et le milieu liquide au droit de cette zone utile.

Le matériau 14a présentant la tension superficielle la plus grande est par exemple un matériau choisi dans le groupe comprenant la lécithine, les siloxanes de formule $(SiO)_n$, les résines du type sulfonate d'alkylbenzène connues sous l'abréviation de résines ABS, les résines connues sous l'abréviation DMOAP.

Le matériau 14b présentant la tension superficielle la plus faible, est par exemple un matériau fluoré tel que du fluorure de carbone, du fluorure de magnésium.

## Revendications

1. Cellule d'affichage comprenant un milieu liquide intercalé entre deux parois (4, 6) maintenues écartées l'une de l'autre, les parois étant maintenues solidaires (10) l'une à l'autre le long de leur bord, caractérisée en ce que les deux surfaces intérieures des parois (4, 6) sont, dans la zone utile à l'affichage, recouvertes d'un premier matériau (14a), et en dehors de ladite zone, recouvertes d'un second matériau (14b), le premier matériau (14a) présentant une tension superficielle plus grande que le deuxième matériau (14b).

2. Cellule selon la revendication 1, caractérisée en ce que le milieu liquide (2) est un cristal liquide.

3. Cellule selon l'une quelconque des revendications 1 et 2, caractérisée en ce que le deuxième matériau (14b) présentant la tension superficielle la plus faible est un matériau fluoré.

4. Cellule selon la revendication 3, caractérisée en ce que le matériau fluoré est choisi dans le groupe comprenant le fluorure de carbone, le fluorure de magnésium.

5. Cellule selon l'une quelconque des revendications 1 à 4, caractérisée en ce que le premier matériau (14a) présentant la tension superficielle la plus grande est choisi dans le groupe comprenant la lécithine, les siloxanes, les résines du type sulfonate d'alkylbenzène et les résines connues sous l'abréviation DMOAP.

6. Procédé de fabrication de la cellule d'affichage selon la revendication 1, dans laquelle le milieu liquide est localisé, caractérisé en ce que, avant de rendre solidaire les deux parois, on recouvre chacune des surfaces intérieures des parois de deux matériaux (14a, 14b) présentant des tensions superficielles différentes, de façon que, après avoir rempli de milieu liquide (2) la cellule, la zone occupée par le milieu liquide soit située en dehors du matériau présentant la tension superficielle la plus faible (14b) et que la zone occupée par le milieu liquide soit située au droit du matériau présentant la tension superficielle la plus grande (14a).

## Claims

1. Display cell comprising a liquid medium between two walls (4, 6) which are held separate from one another, the walls being fixed together (10) lengthwise of their edge, characterized in that the two internal surfaces of the walls (4, 6) are covered with a first material (14a) in the region employed for display, and covered with a second material (14b) outside said region, the first material (14a) having a surface tension greater than that of the second material (14b).

2. Cell according to claim 1 characterized in that the liquid medium (2) is a liquid crystal.

3. Cell according to either of claims 1 and 2, characterized in that the second material (14b) having the lower surface tension is a fluorinated material.

4. Cell according to claim 3 characterized in that the fluorinated material is selected from the group comprising fluorocarbons and magnesium fluoride.

5. Cell according to any one of claims 1 to 4, characterized in that the first material (14a) having the greater surface tension is selected from the group comprising lecithin, siloxanes, alkylbenzene sulfonate resins, and the resins known by the abbreviation DMOAP.

6. Process for the manufacture of the display cell according to claim 1, in which the liquid medium is localised, characterized in that each of the internal surfaces of the walls is covered with two materials (14a, 14b) having different surface tensions, before the walls are fixed together, such that, after the cell has been filled with the liquid medium (2), the region occupied by the liquid medium is located beyond the material (14b) having the lower surface tension, and in that the region occupied by the liquid medium is located in contact with the material (14a) having the greater surface tension.

**Patentansprüche**

1. Festlegungszelle, enthaltend ein flüssiges Medium, das zwischen zwei Wänden (4, 6) eingeschlossen ist, die in gegenseitigem Abstand gehalten sind, wobei die Wände längs ihrer Ränder miteinander verbunden sind (10), dadurch gekennzeichnet, daß die zwei Innenseiten der Wände (4, 6) in dem zur Festlegung verwendeten Bereich von einem ersten Material (14a) bedeckt sind und außerhalb dieses Bereiches von einem zweiten Material (14b) bedeckt sind, wobei das erste Material (14a) eine Oberflächenspannung aufweist, die größer als die des zweiten Materials (14b) ist.

2. Zelle nach Anspruch 1, dadurch gekennzeichnet, daß das flüssige Medium (2) ein Flüssigkristall ist.

3. Zelle nach einem der Ansprüche 1 und 2, dadurch gekennzeichnet, daß das zweite Material (14b), das die kleinste Oberflächenspannung aufweist, ein fluoriertes Material ist.

4. Zelle nach Anspruch 3, dadurch gekennzeichnet, daß das fluorierte Material aus der Gruppe ausgewählt ist, die Kohlenstofffluorid und Magnesiumfluorid enthält.

5. Zelle nach einem der Ansprüche 1 bis 4, dadurch gekennzeichnet, daß das erste Material (14a), das die Größte Oberflächenspannung enthält, aus der Gruppe ausgewählt ist, die Lezithin, die Siloxane, die Sulfonatalkylbenzenharze und die unter der Abkürzung DMOAP bekannten Harze enthält.

6. Verfahren zum Herstellen der Befestigungszelle nach Anspruch 1, in der das flüssige Medium angeordnet ist, dadurch gekennzeichnet, daß vor dem Zusammenfügen der zwei Wände man jede der Innenseiten der Wände mit zwei Materialien (14a, 14b) bedeckt, die unterschiedliche Oberflächenspannungen aufweisen derart, daß nach dem Einfüllen der flüssigen Mediums (2) in die Zelle der von dem flüssigen Medium eingenommene Bereich außerhalb des Materials (14b) liegt, das die kleinste Oberflächenspannung aufweist, und daß der von dem flüssigen Medium eingenommene Bereich dem Material (14a) gegenüberliegt, das die größte Oberflächenspannung aufweist.

FIG. 1

FIG. 2